Europäisches Patentamt

(19) European Patent Office

Office européen des brevets

(11) Numéro de publication: **0 087 997**
**B1**

(12) **FASCICULE DE BREVET EUROPÉEN**

(45) Date de publication du fascicule du brevet:
**13.08.86**

(51) Int. Cl.⁴: **G 11 B 5/58**, G 06 K 7/08

(21) Numéro de dépôt: **83400318.8**

(22) Date de depot: **15.02.83**

(54) **Dispositif de lecture et/ou d'écriture magnétique.**

(30) Priorité: **26.02.82 FR 8203260**

(43) Date de publication de la demande:
**07.09.83 Bulletin 83/36**

(45) Mention de la délivrance du brevet:
**13.08.86 Bulletin 86/33**

(84) Etats contractants désignés:
**DE GB IT NL SE**

(56) Documents cité:
**CH-A-624 236**
**DE-B-2 659 640**
**US-A-3 831 188**
**US-A-3 940 796**

**IBM TECHNICAL DISCLOSURE BULLETIN, vol. 18,**
**no. 2, juillet 1975, page 541, New York**
**USA;T.A.HICKOX: "Head mount"**

(73) Titulaire: **COMPAGNIE EUROPEENNE DE COMPOSANTS ELECTRONIQUES LCC, 50, rue Jean -Pierre Timbaud B.P. 301, F-92402 Courbevoie (FR)**

(72) Inventeur: **Chabrolle, Jacques, THOMSON- CSF SCPI 173, bld Haussmann, F-75379 Paris Cedex 08 (FR)**

(74) Mandataire: **Ruellan- Lemonnier, Brigitte, THOMSON- CSF SCPI 19, avenue de Messine, F-75008 Paris (FR)**

## Description

La présente invention a pour objet un dispositif de lecture et/ou d'écriture magnétique, notamment destiné à des supports magnétiques tels que des cartes magnétiques.

Un tel dispositif comprend généralement un guide pour un support magnétique et un support de tête magnétique. Il présente des problèmes au niveau du contact entre la tête et la piste du support magnétique, du fait que celui-ci est généralement rigide ou semi-rigide (plastique, carton, etc...). En effet, de tels supports présentent des déformations quasi-permanentes et quelconques qui rendent difficile le contact avec la tête magnétique.

Des dispositifs de l'art connu ont été proposés pour pallier ces inconvénients. On peut citer notamment le brevet US-A-3 940 796 qui divulgue un dispositif où la tête magnétique possède un degré de liberté en rotation grâce à un montage sur pivots dans un étrier mobile par rapport a un point d'une pièce fixe et qui assure à la tête magnétique un mouvement de translation par rapport au support d'information. Cependant, ce mouvement de translation se fait selon un arc de cercle.

La présente invention a pour objet un dispositif qui ne présente pas les inconvénients mentionnés ci-dessus.

L'invention concerne ainsi un dispositif de lecture et/ou d'écriture magnétique comprenant une platine supportant un guide presentant une fente permettant l'introduction d'un support magnétique d'information, la platine supportant également des moyens mécaniques de maintien d'une tête magnétique, ces moyens mécaniques permettant de mettre la tête magnétique en relation avec le support magnétique d'information grâe à un moyen de rappel élastique, tout en lui assurant une certaine liberté en rotation autour d'un axe grâce à un montage sur deux pivots, caractérisé en ce que lesdits moyens mécaniques comprennent une pièce fixée sur la platine à une distance déterminée du guide et que l'étrier mobile est susceptible de se déplacer perpendiculairement audit guide et entre deux limites imposées par la pièce fixe, ce déplacement étant assuré par un guide du moyen de rappel élastique, solidaire de l'étrier mobile et coulissant dans la pièce fixe, les pivots fixés sur un étrier mobile étant guidés par deux rainures de ladite pièce fixe.

Ledit axe est de préférence parallèle à la direction de déplacement du support magnétique dans le guide.

Selon un mode de réalisation les deux rainures peuvent être ménagées chacune dans une face latérale de la pièce fixe qui forme également une butée pour l'étrier mobile dans le sens où il presse le support magnétique contre ledit guide.

Selon un mode de réalisation, l'étrier mobile présente une partie centrale portant un guide autour duquel est disposé un ressort qui vient coulisser dans un alésage ménagé dans une face arrière de la pièce fixe.

Selon un mode de réalisation, la pièce fixe est montée sur une platine par l'intermédiaire de vis engagées dans des rainures de la pièce fixe.

Selon un mode de réalisation, une feuille métallique nonmagnétique, mince et résistante à l'abrasion est fixée sur le guide d'un support magnétique et se trouve adjacente à la tête magnétique de telle sorte qu'elle protège la tête magnétique contre l'usure lors du passage du support magnétique.

L'invention sera mieux comprise à la lecture de la description qui va suivre donnée à titre d'exemple non limitatif, avec référence aux dessins dans lesquels:

- les figures 1a et 1b représentent la pièce fixe suivant l'invention respectivement en coupe verticale et en vue de dessus,
- la figure 2a représente l'étrier mobile suivant l'invention en vue de dessus,
- la figure 2b représente en coupe un guide de ressort suivant l'invention,
- les figures 3a et 3b représentent un dispositif selon l'invention à l'état monté, respectivement en coupe verticale et en vue de dessus.

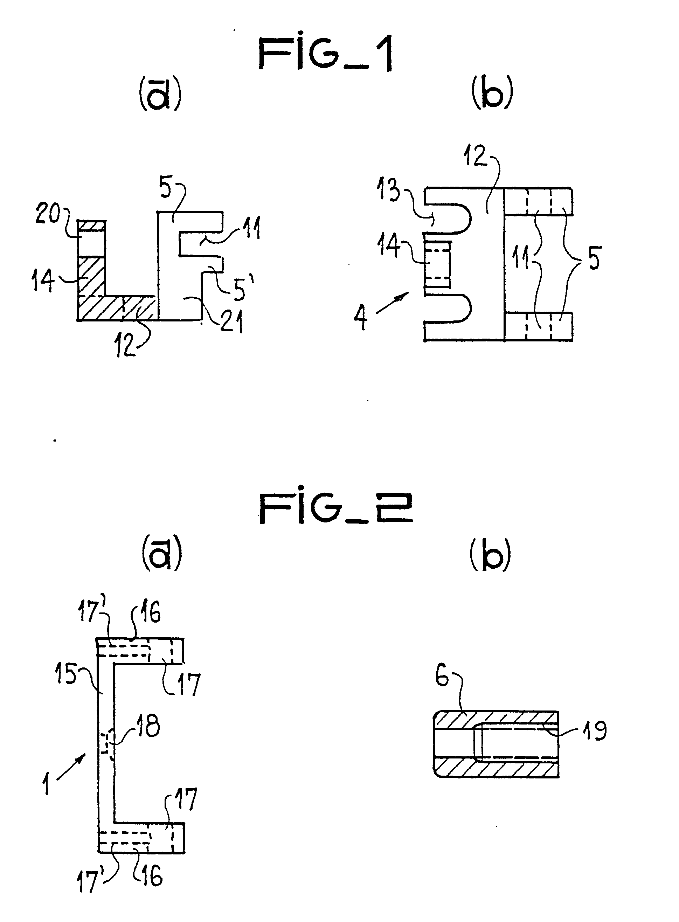

Les figures 1a et 1b représentent une pièce fixe désignée par le repère général 4. Elle comporte une plaque de base 12 de forme générale rectangulaire qui présente sur un de ses grands côtés et perpendiculairement à celui-ci deux rainures symétriques 13. Le grand côté opposé porte à chacune de ses extrémités une face latérale 21 dont chacun prolonge les petits côtés du rectangle.

Chaque face latérale 21 porte une rainure 11 délimitée par deux fourchettes 5 et 5'. Entre les deux rainures 13 de la plaque de base 12, est ménagée une face arrière 14 comportant un alésage 20.

La figure 2a représente l'étrier mobile désigné par le repère général 1. Il comporte une partie centrale 15 et perpendiculairement à celle-ci et a ses extrémités deux parties latérales 16 situées du même côté. Un alésage 18 traverse la partie centrale 15 en son milieu et permet de recevoir une tête de vis et de laisser passer son axe dans la direction opposée aux parties latérales 16. Les parties latérales 16 présentent chacune un alésage 17 d'axe parallèle à la direction longitudinale de la partie centrale 15, ainsi qu'un alésage 17' s'étendant depuis une extrémité de la partie centrale 15 jusqu'à déboucher dans l'alésage 17 correspondant.

La figure 2b représente un guide 6 de ressort. Il se présente sous la forme d'une pièce cylindrique pourvue d'un alésage axial taraudé en 19 sur une partie de sa longueur. Son diamètre extérieur correspond à celui de l'alésage 20 précité, ménagé dans la face arrière 14.

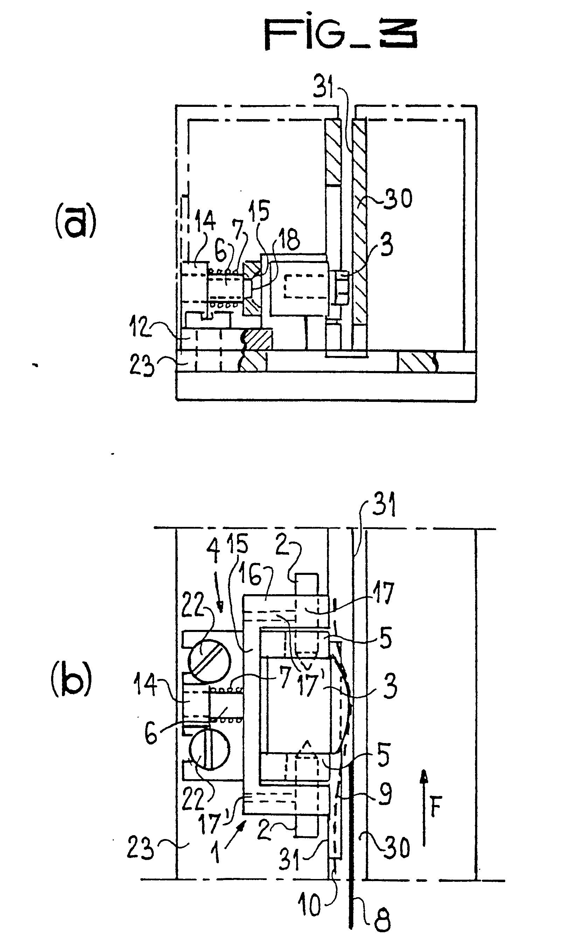

Selon les figures 3a et 3b, la pièce fixe 4 est fixée sur une platine 23 par des vis 22 insérées dans ses rainures 13. Ces rainures permettent le réglage de l'ensemble du dispositif en direction d'un guide 30 pour un support magnétique 8, tel qu'une carte magnétique. Ce guide 30 se présente classiquement sous la forme d'une fente dans laquelle le support magnétique 8 est déplacé horizontalement dans le sens de la flèche F.

Le guide 6 de ressort est fixé à l'étrier mobile 1 par une vis introduite dans l'alésage 18 et vissée dans le taraudage 19, le guide 6 autour duquel est disposé le ressort 7 ayant été préalablement introduit dans l'alésage 20 de la face arrière 14 de la pièce fixe 4. Le ressort 7 est ainsi comprimé entre la face arrière 14 et la partie centrale 15. Deux pivots 2, par exemple des stubs, sont introduits dans les alésages 17 de l'étrier mobile 1 et maintiennent entre pointes une tête magnétique 3 de telle manière qu'elle soit mobile en rotation. Les axes 2 sont fixés en position par des vis autotaraudeuses vissées dans les alésages 17'. L'étrier mobile 1 étant plus large que la pièce fixe 4, les pivots 2 passent à travers des rainures 11, dont la largeur est ajustée de telle manière que l'étrier mobile 1 puisse coulisser librement mais sans jeu dans le plan horizontal. L'étrier mobile 1 est en outre guidé par coulissement du guide 6 dans l'alésage 20.

Sous l'action du ressort 7, et en l'absence d'un support magnétique 8, la partie centrale 15 de l'étrier fixe vient en butée contre les faces latérales 21 de la pièce fixe. L'entrefer de la tête magnétique 3 est alors espacé d'une paroi opposée 31 du guide 30 d'une distance inférieure à l'épaisseur du support magnétique 8. Dans ces conditions, la force de rappel du ressort 7 va maintenir le contact entre la tête magnétique 3 et la piste magnétique du support 8. La rotation de la tête 3 autour des pivots 2 va permettre également à celle-ci de rester en contact avec la piste magnétique en présence de gauchissements latéraux du support 8.

Selon un mode de réalisation particulièrement avantageux, une feuille métallique 9 est interposée entre la tête magnétique 3 et la paroi 31 du guide 30 et est fixée sur la face 32 du guide 30 située du côté de la tête 3, ou sur la platine 23. Cette feuille peut être fixée en 10 en amont de la tête 3 par rapport au sens de déplacement du support magnétique 8. La feuille métallique 9 protège donc la tête 3 de l'abrasion due à la force de frottement avec le support 8. La feuille métallique 9 doit donc être non-magnétique et mince (par exemple d'épaisseur inférieure à 20 microns) pour ne pas perturber la lecture de la carte. Elle doit être en outre resistante a l'abrasion pour subir sans dommages les frottements avec le support magnétique 8. Un matériau convenable est le nitrure de titane ou bien encore un acier à ressort amagnétique et inoxydable tel que le "Phynox" (Marque Déposée par les aciéries d'Imphy).

L'invention ne se limite pas au mode de réalisation décrit. Ainsi, les faces latérales 21 peuvent être montées à l'extérieur des parties latérales 16 de manière à conserver l'effet de guidage par les rainures 11, auquel cas l'effet de butée est obtenu par des protubérances prolongeant la partie centrale 15 ou bien portées par la platine 23. Les faces latérales 21 peuvent être également imbriquées avec les parties latérales 16.

D'autre part, le dispositif selon l'invention peut recevoir une tête multi-pistes.

Enfin, un porte-tête unique peut être équipé de faces latérales 21 dans lesquelles sont ménagées autant de rainures 11 que l'on désire de têtes indépendantes, chacune d'entre elles étant associée à un étrier 1.

**Revendications**

1. Dispositif de lecture et/ou d'écriture magnétique comprenant une platine (23) supportant un guide (30) présentant une fente permettant l'introduction d'un support magnétique d'information (8), la platine supportant également des moyens mécaniques de maintien d'une tête magnétude (3), ces moyens mécaniques permettant de mettre la tête magnétique en relation avec le support magnétique d'information grâe à un moyen de rappel élastique (7), tout en lui assurant une certaine liberté en rotation autour d'un axe grâce à un montage sur deux pivots (2) fixés sur un étrier mobile caractérisé en ce que lesdits moyens mécaniques comprennent une pièce (4) fixée sur la platine (23) à une distance déterminée du guide (30) et que l'étrier mobile (1) est susceptible de se déplacer perpendiculairement audit guide (30) et entre deux limites imposées par la pièce fixe (4), ce déplacement étant assuré par un guide (6) du moyen de rappel élastique, solidaire de l'étrier mobile (1) et coulissant dans la pièce fixe (4), les pivots (2) étant guidés par deux rainures (11) de ladite pièce fixe.

2. Dispositif selon la revendication 1, caractérisé en ce que ledit axe est parallèle à la direction de déplacement du support magnétique (8) dans le guide (30).

3. Dispositif selon la revendication 1, caractérisé en ce que les deux rainures (11) sont ménagées chacune dans une face latérale de la pièce fixe et en ce que la pièce fixe (4) comporte une partie (21) formant butée pour l'étrier mobile (1) dans le sens où il presse le support magnétique (8) contre ledit guide (30) et constituant l'une desdites limites.

4. Dispositif selon l'une des revendications précédentes, caractérisé en ce que l'étrier mobile (1) présente une partie centrale (15) portant le guide (6) du moyen de rappel élastique autour duquel est disposé un ressort (7) et qui vient coulisser dans un alésage (20) ménagé dans une face arrière (14) de la pièce fixe (4).

5. Dispositif selon l'une des revendications précédentes, caractérisé en ce que la pièce fixe (4) est montée sur la platine (23) par l'intermédiare de vis (22) engagées dans des rainures (13) de la pièce fixe (4).

6. Dispositif selon l'une des revendications précédentes, caractérisé en ce qu'il comporte une feuille métallique non-magnétique (9) mince et résistante à l'abrasion fixée sur le guide (30) d'un support magnétique et adjacente à la tête magnétique de telle sorte qu'elle protège la tête magnétique (3) contre l'usure lors du passage du support magnétique (8).

**Patentansprüche**

1. Vorrichtung zum magnetischen Auslesen und/oder Aufzeichnen, mit einer Trägerplatte (23) für eine Führung (30), die einen Schlitz zur Einführung eines magnetischen Informationsträgers (8) aufweist, wobei die Trägerplatte ferner mechanische Mittel zum Halten eines Magnetkopfes (3) trägt, wobei diese mechanischen Mittel geeignet sind, um den Magnetkopf durch ein elastisches Rückholmittel (7) in Beziehung mit dem magnetischen Informationsträger zu bringen, wobei ihm gleichzeitig eine gewisse Drehbewegungsfreiheit um eine Achse durch eine Lagerung auf zwei Schwenkzapfen (2) verbleibt, die auf einem beweglichen Bügel befestigt sind, dadurch gekennzeichnet, daß die genannten mechanischen Mittel ein Teil (4) umfassen, welches auf der Trägerplatte (23) in einem bestimmten Abstand von der Führung (30) befestigt ist, und daß der bewegliche Bügel (1) geeignet ausgebildet ist, um sich senkrecht zu der genannten Führung (30) und zwischen zwei Grenzen zu bewegen, die durch das feste Teil (4) aufgegeben sind, wobei diese Bewegung durch eine Führung (6) der elastischen Rückholmittel gewährleistet ist, die fest mit dem beweglichen Bügel (1) verbunden ist und in dem festen Teil (4) gleitbeweglich ist, wobei die Schwenkzapfen (2) durch zwei Rillen (11) des genannten festen Teils geführt werden.

2. Vorrichtung nach Anspruch 1, dadurch gekennzeichnet, daß die genannte Achse parallel zu der Bewegungsrichtung des magnetischen Trägers (8) in der Führung (30) ist.

3. Vorrichtung nach Anspruch 1, dadurch gekennzeichnet, daß die zwei Rillen (11) jeweils in einer Seitenfläche des festen Teils angebracht sind und daß das feste Teil (4) einen Teil (21) umfaßt, der einen Anschlag für den beweglichen Bügel (1) in demjenigen Sinne bildet, in welchem er den magnetischen Träger (8) gegen die genannte Führung (30) drückt und eine der genannten Grenzen bildet.

4. Vorrichtung nach einem der vorstehenden Ansprüche, dadurch gekennzeichnet, daß der bewegliche Bügel (1) einen zentralen Teil (15) aufweist, welcher die Führung (6) der elastischen Rückholmittel trägt, um welche herum eine Feder (7) angeordnet ist und welche in einer Bohrung (20) gleitverschiebbar ist, die in einer rückseitigen Fläche (14) des festen Teils (4) angebracht ist.

5. Vorrichtung nach einem der vorstehenden Ansprüche, dadurch gekennzeichnet, daß das feste Teil (4) auf der Trägerplatte (23) mittels Schrauben (22) montiert ist, die in Rillen (13) des festen Teils (4) eingesetzt sind.

6. Vorrichtung nach einem der vorstehenden Ansprüche, dadurch gekennzeichnet, daß sie eine dünne unmagnetische Metallfolie (9) umfaßt, die abriebfest sowie auf der Führung (30) eines magnetischen Trägers befestigt und angrenzend an den Magnetkopf angeordnet ist, dergestalt, daß sie den Magnetkopf (3) beim Vorbeilaufen des magnetischen Trägers (8) vor Verschleiß schützt.

**Claims**

1. Magnetic reading and/or writing device comprising a platen (23) carrying a guide (30) having a slot permitting the introduction of a magnetic information carrier (8), the platen further carrying mechanic means for holding a magnetic head (3), these mechanic means permitting to bring the magnetic head in relation with the magnetic information carrier through resilient return means (7) while allowing a certain rotational liberty thereof about an axis due to a support on two pivots (2) fixed on a movable bracket, characterized in that said mechanic means comprise a member (4) fixed on the platen (23) at a determined distance from the guide (3) and that the movable bracket (1) is susceptible to move perpendicularly to said guide (30) and between two limits imposed by said fixed member (4), the movement being ensured by a guide (6) of the resilient return means, joined with the movable bracket (1) and sliding within the fixed member (4), the pivots (2) being guided by two grooves (11) of said fixed member.

2. Device according to claim 1, characterized in that said axis is parallel to the direction of movement of the magnetic carrier (8) in the guide (30).

3. Device according to claim 1, characterized in that the two grooves (11) are each arranged in a lateral face of the fixed member and in that the fixed member (4) comprises a portion (21) forming a stop for the movable bracket (1) in the sense where it urges the magnetic carrier (8) against said guide (30), and forming one of said limits.

4. Device according to any of the preceding claims, characterized in that the movable bracket (1) has a central portion (15) carrving the guide (6) of the resilient return means about which a spring (7) is arranged, and which slides in a bore (20) arranged in a rearward face (14) of the fixed member (4).

5. Device according to any of the preceding claims, characterized in that said fixed member (4) is mounted on the platen (23) by means of screws (22) engaged in grooves (13) of the fixed member (4).

6. Device according to any of the preceding claims, characterized in that it comprises a metallic nonmagnetic thin foil (9) which is abrasion resistant and fixed on the guide (30) of a magnetic carrier adjacent to the magnetic head in such a manner that it protects the magnetic head (3) against wear during the passage of the magnetic carrier (8).

# FIG_1

(a)

(b)

# FIG_2

(a)

(b)

# FiG_3

(a)

(b)